# FASCICULE DE BREVET EUROPEEN

(11) **EP 0 441 086 B1**
(45) Date de publication et mention de la délivrance du brevet: **20.10.1993**
(21) Numéro de dépôt: 90460054.1
(22) Date de dépôt: 28.12.1990
(51) Int. Cl.: A01K 5/02

(54) **Procédé de préparation et de distribution d'aliments pour animaux, notamment de porcelets**
Verfahren zur Herstellung und Verteilung von Tierfutter, insbesondere für Ferkel
Method for the production and the distribution of food for animals, especially for piglets

(30) Priorité: 08.02.1990 FR 9001636
(43) Date de publication de la demande: 14.08.1991
(73) Titulaire: VOLAC LIMITED, Royston, Hertfordshire SG8 5QG (GB)
(72) Inventeur: Colas, Pierre, F-29190 Lannedern (FR); Guillou, Michel, F-29800 La Roche Maurice (FR); Coroller, Yvon, F-16700 Ruffec (FR)
(74) Mandataire: Corlau, Vincent

(56) Documents cités:
- EP-A- 0 126 240
- EP-A- 0 163 079
- EP-A- 0 163 080
- BE-A- 856 089
- DE-A- 1 607 152
- DE-A- 2 027 151
- US-A- 4 513 687
- logoff

## Description

L'invention concerne un procédé de préparation et de distribution d'aliments pour des animaux, en particulier, de porcelets. L'invention concerne également une installation pour la mise en oeuvre de ce procédé.

Dans les élevages de porcs, il arrive assez souvent que la truie mette bas un nombre de porcelets supérieur à ce qu'elle peut, de par sa physiologie, allaiter. Dans ces conditions, les porcelets sains et vigoureux sont correctement nourris alors que ceux, plus fragiles ou en moins bonne santé, dépérissent et sont, à terme, condamnés. Pour l'éleveur, cette situation entraine un manque à gagner qui peut être important.

On a pensé, pour pallier cet inconvénient, à nourrir certains porcelets de la portée à l'aide de produits de substitution, tel que du lait en poudre mélangé à de l'eau.

Cependant la mise en oeuvre d'une telle méthode d'alimentation est, pour l'éleveur, assez contraignante. En effet, les repas doivent être pris régulièrement et fréquemment, au moins une fois par heure dans les premiers jours. Par ailleurs, chaque repas doit présenter un volume et une concentration en aliment sec qui varient en fonction de l'âge physiologique des porcelets et de la durée depuis laquelle ils sont alimentés de la sorte, ce qui nécessite une gestion et un contrôle de cette gestion assez lourds.

Des machines automatiques de distribution d'aliments sont certes connus, mais, appliquées à la distribution d'aliments pour porcelets, elles ne résolvent pas un certain nombre de problèmes techniques liés, d'une part, à la concentration en aliment sec des aliments de substitution qui est, somme toute, relativement faible, et, d'autre part, au fait que ces produits de substitution peuvent, après distribution, stagner dans la tuyauterie de la machine et la rendre, à terme, insalubre.

On connaît ainsi du document de brevet BE-A-856 089 un procédé de préparation et de distribution d'aliments pour des animaux parqués dans des cases dans chacune desquelles se trouve une auge, consistant à préparer dans un mélangeur primaire, un premier mélange d'aliment sec et de liquide de dilution, à distribuer ce mélange dans des mélangeurs secondaires, et enfin à effectuer, dans chaque mélangeur secondaire, une dilution du premier mélange afin d'obtenir un second mélange moins concentré. Ce second mélange est ensuite distribué dans les auges.

Le principal inconvénient présenté par cette technique consiste dans le fait que le premier mélange possède une consistance pâteuse. Sa stagnation dans les canalisations permettant de l'acheminer du mélangeur primaire vers les mélangeurs secondaires entraîne inéluctablement une obstruction de celles-ci.

Le but de l'invention est de proposer un procédé et une installation qui permet de pallier les inconvénients mentionnés ci-dessus et de résoudre les problèmes cités.

A cet effet, l'invention concerne un procédé de préparation et de distribution d'aliments pour des animaux parqués dans une pluralité de cases dans chacune desquelles se trouve une auge, lesdits aliments étant composés d'au moins un aliment sec en poudre mélangé à un liquide de dilution et étant distribué, à l'auge de chacune des cases, en volume et concentration prédéterminés.

Plus précisément, l'invention concerne un procédé consistant :
a) à d'abord préparer dans un mélangeur un volume prédéterminé d'un mélange d'aliment sec et de liquide de dilution en concentration prédéterminée en aliment sec,
b) à distribuer ensuite, par une même canalisation, à l'auge de chacune des cases, un volume du mélange en concentration unique obtenu en a) qui est fonction d'un volume final d'aliment à préparer pour chaque auge, et
c) à diluer enfin, dans chaque auge, le mélange distribué en b) avec le liquide de dilution afin d'obtenir, dans chaque auge, le volume final d'aliment en concentration prédéterminée pour chaque auge,

la dilution effectuée en c) étant réalisée en distribuant le liquide de dilution par la même canalisation que celle par laquelle on a distribué en b) le mélange préparé en a),
caractérisé en ce que les mélangeurs secondaires sont les auges, et en ce que la dilution effectuée en c) est réalisée en distribuant le liquide de dilution par la même canalisation que celle par laquelle on a distribué en b) le mélange préparé en a).

Selon une autre caractéristique de l'invention, le volume final d'aliment préparé pour chaque auge à l'étape c) est fonction de l'âge physiologique des animaux à nourrir et de leur nombre dans chaque case contenant l'auge et la concentration en aliment sec du volume final d'aliment préparé en c) est fonction de la durée depuis laquelle lesdits animaux sont nourris dans les cases.

L'invention concerne également une installation pour la mise en oeuvre du procédé ci-dessus comprenant un ensemble de cases, où sont parqués les animaux et dans chacune desquelles sont installés une auge, un système de distribution comprenant un silo où est stocké un aliment sec, un mélangeur présentant deux entrées et une sortie, une entrée étant prévue pour recevoir l'aliment sec qui est stocké dans le silo et qui est amené par un transporteur et l'autre pour recevoir le liquide de dilution via un moyen de commande d'alimentation, l'entrée d'une pompe étant branchée à la sortie du mélangeur et la sortie de ladite pompe étant reliée à une canalisation unique déservant, par l'intermédiaire de moyens de commande de distribution, des mélangeurs secondaires de chacune des cases,
caractérisé en ce que:
- dans chacune des cases (4a à 4c) est installé un moyen (10a à 10c), pour pouvoir, de manière commandée, empêcher les animaux parqués dans la case (4a à 4c) d'atteindre l'auge (9a à 9c),
- le mélangeur (20) est muni d'un agitateur (22),
- les mélangeurs secondaires sont les auges (9a à 9c) et
- l'installation comprend un automate programmable (3) commandant le transporteur (16), l'agitateur (22), le moyen de commande d'alimentation (28), la pompe (36), les moyens de commande de distribution (38a à 3&) de chaque auge (9a à 9c) et le moyen (10a à 10c) pour empêcher les animaux d'atteindre les auges (9a à 9c).

Les caractéristiques de l'invention mentionnées ci-dessus, ainsi que d'autres, apparaîtront à la lecture de la description suivante d'un exemple de réalisation, ladite description étant faite en relation avec les dessins joints, parmi lesquels:
la Fig. 1 est une vue en perspective d'une installation d'élévage d'animaux selon l'invention, et
Les Fig. 2 et 3 représentent deux variantes de réalisation de l'auge escamotable selon l'invention.

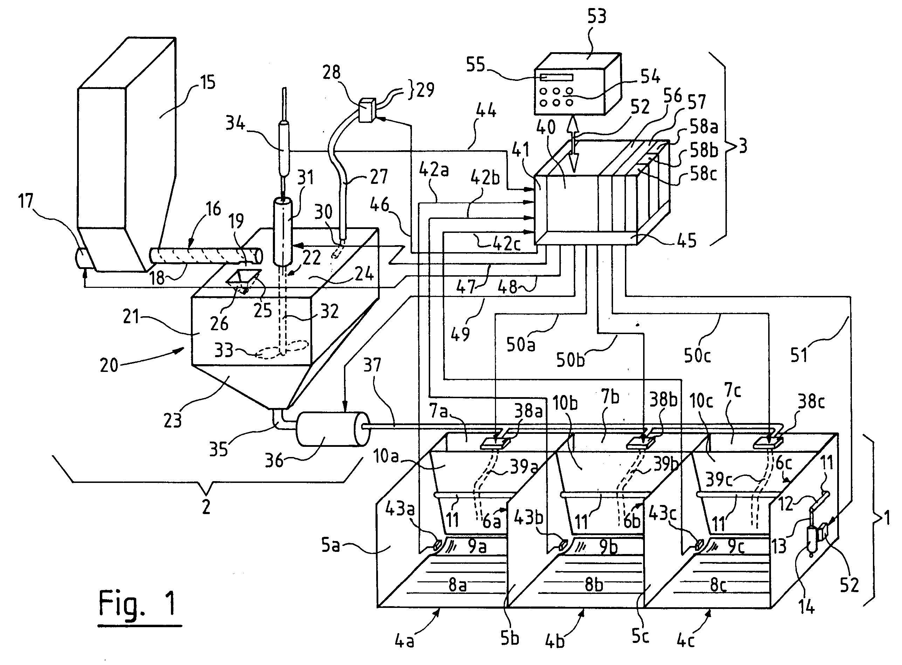

L'installation de distribution d'aliments représentée à la Fig. 1 comprend un ensemble de cases 1, un système de distribution 2 et un automate programmable 3.

Sur la Fig. 1, l'ensemble de case 1 est constitué de trois cases 4a, 4b et 4c. En pratique, ce nombre de trois n'est pas limitatif et dépend, en fait, du nombre d'animaux, en particuliler, de porcelets que l'on désire nourrir dans l'installation.

Les cases 4a, 4b et 4c sont montées côte à côte et comprennent, chacune, deux parois latérales 5 et 6 (respectivement 5a, 6a; 5b, 6b; 5c, 6c), une paroi de fond 7, un caillebotis 8 et, au sol, longeant la paroi du fond, une auge 9. Elles comprennent, de plus, une porte rectangulaire 10 sensiblement verticale fixée sur un axe longitudinal et horizontal 11. Au bout de cet axe, est fixée une bielle 12 sur laquelle est montée, pivotant, la tige 13 d'un vérin 14 dont le fût est fixé, pivotant également, sur une paroi latérale 6c de la case d'extrémité (4c sur la Fig. 1).

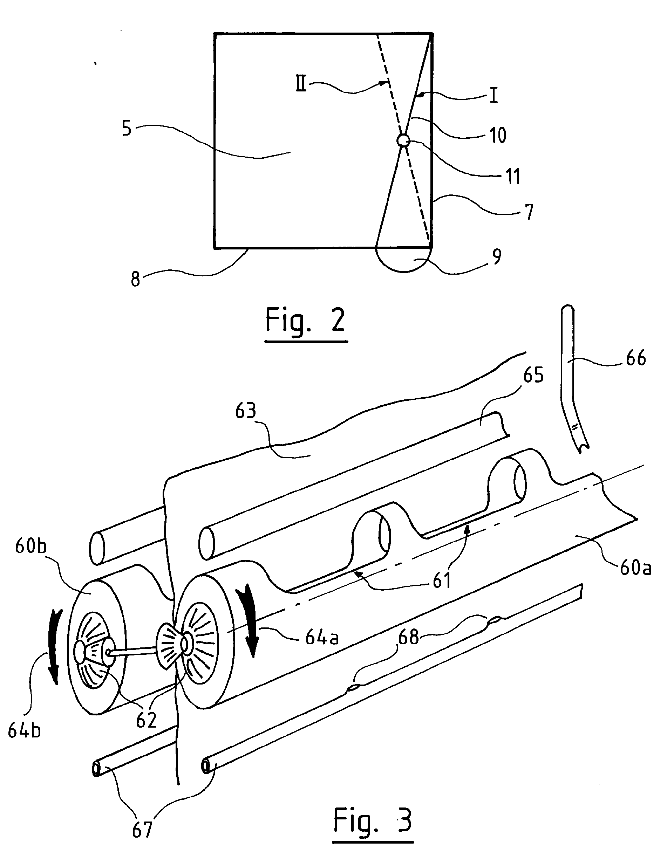

Sous l'action du vérin 14, l'axe 11 peut tourner d'un certain angle et entraîner avec lui les portes 10a, 10b et 10c. Celles-ci peuvent alors prendre deux positions (Fig. 2): dans une première, chacune d'elles forme, avec les parois latérales 5, 6 et le caillebotis 8 de la case, un volume d'où est exclue l'auge 9, et, dans l'autre position, chacune d'elles forme un volume dans lequel se trouve l'auge 9 de la case.

Le distributeur d'aliments 2 comprend un silo 15 dans lequel est stocké un aliment sec, tel que du lait en poudre, et qui est muni à sa base d'une vis sans fin 16. Celle-ci est entraînée par un moteur électrique 17 et est enfermée dans un tube 18 qui présente, à une extrémité, une ouverture 19. Il comprend également un mélangeur 20 constitué d'une cuve 21 et d'un agitateur 22. La cuve 21 a, par exemple, une forme sensiblement parallélépipèdique et se termine, à sa base, par une trémie 23. Elle est fermée, sur sa face supérieure, par une plaque horizontale 24 présentant une ouverture 25 d'où part, vers l'intérieur de la cuve 21, une trémie 26. Sur la plaque 24, est fixé le bout d'un tuyau souple 27 raccordé, par l'intermédiaire d'un moyen de commande d'alimentation, tel qu'une électrovanne 28 et, par son autre bout 29, à une alimentation (non représentée) en liquide de dilution de l'aliment sec, tel que de l'eau. Le bout du tuyau 30, côté cuve 21, entre dans la cuve 21 et est recourbé pour être dirigé vers une des parois latérales de la cuve 21. Au centre de la plaque 24, est fixé l'agitateur 22. Il est constitué d'un moteur électrique 31 présentant un arbre vertical allongé 32 au bout duquel est montée une hélice 33 à pales. L'hélice 33 est, dans la cuve 21, légèrement au-dessus du niveau de la trémie 23. L'ensemble formé par la cuve 21 et l'agitateur 22 est suspendu par l'intermédiaire d'un dispositif de pesée 34, qui peut être, par exemple, du type à jauge de contrainte. Le silo 15 et le mélangeur 20 sont disposés l'un par rapport à l'autre de manière que l'ouverture 19 de la vas sans fin 16 soit à l'aplomb de l'ouverture 25 de la plaque 24.

A la sortie de la trémie 23, par un tuyau souple 35, est branchée l'entrée d'une pompe 36 dont la sortie est branchée à une canalisation 37. Sur la canalisation 37, sont montées, en dérivation, les entrées d'électrovannes 38a, 38b et 38c dont les sorties sont respectivement reliées à des tuyaux 39a, 39b et 39c. Le bout de chacun des tuyaux 39 surplombe légèrement l'auge 9 de la case 4 associée.

Le raccordement du mélangeur 20 a l'électrovanne 28 à la pompe 36 est respectivement effectué aux moyens de tuyaux souples 27 et 35, ceci pour permettre au mélangeur 20 de n'être suspendu que par l'intermédiaire du dispositif de pesée 34.

L'automate programmable 3 est constitué d'un calculateur 40 muni d'un ensemble de ports d'entrée 41 respectivement reliés, par des fils 42a, 42b et 42c, a des détecteurs de liquide 43a, 43b et 43c montés, chacun, dans une auge 9 d'une case 4 associée et, par un fil 44, à la sortie de signal du dispositif de pesée 34 ainsi qu'un ensemble de ports de sortie 45 respectivement reliés, par le fil 46, à l'entrée de commande de l'électrovanne 28, par le fil 47, à l'entrée de commande du moteur 17 de la vis sans fin 16, par le fil 48, à l'entrée de commande du moteur 38 de l'agitateur 22, par le fil 49, à l'entrée de commande de la pompe 36, par les fils 50a, 50B et 50C, aux entrées de commande des électrovannes 38a, 38b et 38c, et, par le fil 51, à l'entrée d'une interface 52 de commande du vérin 14.

Le calculateur 40 est relié, via un bus 52, à une interface 53 de dialogue homme-machine, telle qu'un clavier 54 et un dispositif d'affichage 55. Le calculateur 40 est également en liaison fonctionnelle avec une horloge 56, un compteur 57 et des registres 58a, 58b et 58c, en nombre égal au nombre de cases 4 de l'installation. Les fonctions de ces éléments (56, 57, 58) seront expliquées ci-après.

La préparation et la distribution d'un repas à chaque case 4 de l'installation de l'invention sont maintenant décrites.

La première étape est l'initialisation de l'automate 3 qui est réalisée au moment où l'on introduit les porcelets dans les cases 4. Ils sont, en général, introduits dans les cases après leur sevrage et pour une période de quelques semaines. Pour cette initialisation, on précise à l'automate 3, via l'interface homme-machine 53, le nombre de porcelets introduits dans chacune des cases 4 et leur âge physiologique qui correspond à leur âge réel. Dans chacune des cases 4, ne se trouvent que des porcelets de même âge physiologique. On initialise le compteur 57 et les registres 58a, 58b, 58c avec la valeur zéro. Le compteur compte le nombre de jours de présence des porcelets dans les cases 4 de l'installation. Les registres 58 (58a, 58b, 58c) stockent, pour chaque case 4 (respectivement 4a, 4b, 4c) de l'installation, la quantité d'aliments fourni à l'auge 9 (respectivement 9a, 9b, 9c).

Via l'interface homme-machine 53, on programme, ensuite, les heures d'activation de l'horloge 56.

Ces opérations d'initialisation effectuées, l'automate se met en attente d'une activation de la part de son horloge 56. L'automate 3, une fois activé, prend en compte les signaux qu'il reçoit sur l'ensemble des ports d'entrée 41 et qui sont issus des capteurs d'auge 43a, 43b, 43c. Si ces signaux indiquent par leur valeur que les auges 9a, 9b, 9c sont vides, il calcule, pour chaque case 4, la ration d'aliment, en volume et en concentration d'aliments secs, à préparer et à distribuer. Pour chaque case 4, ce calcul est effectué à partir de deux paramètres essentiels: d'une part, l'âge physiologique des porcelets qui permet de déterminer le volume final d'aliment à préparer pour chaque porcelet puis le volume final d'aliment par auge en multipliant ce premier volume par le nombre de porcelets dans la case considérée, et, d'autre part, le nombre de jours de présence des porcelets dans leur case, nombre stocké dans le compteur 57 et qui permet de déterminer la concentration en aliments secs du volume final d'aliment à préparer pour chaque porcelet et aussi pour chaque case. Ce calcul est aussi effectué en fonction de la quantité d'aliment déjà distribuée pendant cette période, quantité qui est stockée, pour chaque case 4, dans les registres 58 correspondant.

Si dans une case, le détecteur 43 indique, par la valeur de son signal de sortie qu'il transmet à l'automate 3, que l'auge 9 n'est pas vide, l'automate 3 en avertit, par exemple par une alarme (non représentée), l'éleveur qui prend les mesures qui s'imposent. L'automate 3, dans ce cas, n'assure plus la distribution d'aliments à cette case, tant que l'éleveur, via l'interface 53, ne lui en redonne par l'ordre.

Une fois la phase préliminaire de calcul effectuée, la préparation et la distribution proprement dites peuvent commencer. L'automate commande l'ouverture de l'électrovanne 28 et le liquide de dilution (de l'eau chaude, par exemple) est introduit dans le mélangeur 20. Pendant ce temps, le dispositif de pesée 34 fournit à l'automate 3, par la ligne 44, des signaux dont la valeur, augmentant proportionnellement à la masse de liquide introduit dans le mélangeur 20, permet d'en déduire cette masse, avec précision. Lorsque cette valeur atteint un seuil qui a été calculé préalablement par l'automate 3 pendant la phase préliminaire de calcul, il ferme l'électrovanne 28. Le volume de liquide de dilution introduit est fonction du volume final d'aliment à préparer pour chaque auge qui, rappelons le, est fonction de l'âge des animaux à nourrir et de leur nombre dans chaque case. La masse de liquide de dilution introduite dans le mélangeur 20 est déterminée, grâce au système de pesée décrit, avec une grande précision, de l'ordre du gramme.

Une fois l'eau introduite, l'automate 3 commande la mise en route du moteur 17 de la vis 16 et celui de l'agitateur 22. La vis 16 entraîne alors une certaine quantité d'aliments secs du silo 15 à l'ouverture 19 qui tombe dans la trémie 26 et la cuve 20. L'agitateur 22 agite le mélange liquide-aliment sec de manière à le rendre homogène. Le dispositif de pesée 34 a son signal de sortie, fourni à l'automate 3, qui augmente d'une quantité proportionnelle au poids d'aliments secs introduits, et, lorsqu'il dépasse un second seuil, également calculé par l'automate 3 durant la phase préliminaire de calcul, il interrompt le fonctionnement de la vis 16. Après une période de temps prédéterminée au bout de laquelle le mélange est jugé homogène, l'automate 3 interrompt le fonctionnement de l'agitateur 22.

A cet instant, le mélange préparé dans la cuve 20 présente une concentration donnée, déterminée par l'automate 3 mais indépendante de l'âge des porcelets et de leur nombre de jours de présence dans l'installation. Cette concentration est, en fait, seulement supérieure à la concentration la plus élevée parmi les concentrations en aliments secs d'aliment à préparer et à distribuer à chacune des cases 4.

L'automate 3 commande l'interface 52 qui actionne le vérin 14 pour manoeuvrer les portes 10 et leur faire prendre la seconde position II dans laquelle le volume des cases 4 n'est plus en communication avec les auges 8. Ainsi, les porcelets n'ont plus accès aux auges 4.

Juste après la manoeuvre des portes 10, l'automate 3 commande la mise en marche de la pompe 36 et l'ouverture, en séquence, des électrovannes 38a, 38b et 38c. Le temps d'ouverture de chaque électrovanne 38 est prédéterminé, par l'automate 3, pour distribuer un volume unique pour chaque auge d'un premier mélange, ayant une concentration unique pour toutes les auges 9.

Une fois la distribution de ce volume effectuée, l'automate commande l'électrovanne 28 qui s'ouvre et permet l'introduction d'eau dans le mélangeur 20. Eventuellement, l'agitateur 22 est mis en route ce que permet au liquide dans la cuve 20 de nettoyer les particules d'aliment sec déposé, lors des étapes antérieures, sur les parois de la cuve 20. La concentration en aliment sec du liquide contenu dans la cuve 20 est très faible.

Une fois la quantité d'eau nécessaire introduite, l'automate 3 commande l'ouverture d'une première électrovanne, par exemple 38a, et la mise en marche de la pompe 36 pendant un temps juste nécessaire pour que la quantité de liquide versé dans l'auge 9a de la case 4a permette d'obtenir un volume d'aliment correspondant à celui qui a été calculé pendant la phase préliminaire de calcul et de concentration en aliments secs correspondant à celle qui a été calculée pendant cette phase préliminaire de calcul.

Le liquide dans l'auge 9a étant distribué, l'automate 3 recommence cette opération d'ajout de liquide pour chacune des autres auges 9 restantes.

Une fois cet ensemble d'opérations consécutives effectuées, l'automate 3 stocke, de manière cumulative, les quantités d'aliments secs et de liquide comsommées pour la préparation de la ration de chaque auge 9 dans les registres 58 correspondant.

Il commande ensuite l'interface 52 et le vérin 14 manoeuvre les portes 10 pour qu'elles retournent dans leur première position I où les auges 9 sont en communication avec le reste du volume des cases 4.

Après ces opérations, l'automate se met en attente d'un signal d'activation de son horloge 56.

Lorsque l'horloge 57 dépasse un compte de 24 heures, elle est remise à zéro et le compteur de journée 58 est incrémenté d'une unité.

Les avantages que procure l'invention résident essentiellement, d'une part, du fait que, lors de la distribution du liquide pour ajuster le volume et la concentration d'aliment dans les auges 9, le mélangeur 20, la pompe 36, la canalisation 37, les tuyaux 39 et les électrovannes 38 sont débarrassés des particules d'aliments secs qui pouvaient s'y être déposées durant la distribution de l'aliment à concentration unique et, d'autre part, par le fait que la quantité d'aliments secs nécessaire dans chaque auge 9 est relativement faible et qu'il est difficile de préparer directement un volume comportant une si faible quantité d'aliments avec la précision requise. Avec l'invention, au contraire, la quantité préparée de mélange liquide-aliment sec est sensiblement celle d'une auge par le nombre d'auges et comporte donc une quantité en aliments secs importante qu'il est possible de mesurer avec grande précision. Le mélange unique une fois préparé et distribué est dilué avec de l'eau pour ajuster volume et concentration pour chaque case.

La figure 3 représente une variante de réalisation des auges. Dans ce mode de réalisation, les auges 60 sont formées dans des tubes de section cylindrique, par exemple en PVC.

Des dégagements 61 sont pratiqués de façon juxtaposée le long du tube 60, et constituent chacun un orifice d'accès au contenu de l'auge pour un porcelet. On peut ainsi disposer par exemple une dizaine de dégagements 61 le long d'un tube 60 de 1,20m de longueur et de 110 mm de diamètre.

Chaque tube 60 est entraîné en rotation autour de son axe longitudinal par un engrenage conique 62. Avantageusement,les tubes sont couplés par paires, de part et d'autre d'une paroi verticale de séparation 63 formant plan de symétrie entre deux cases montées en opposition.Les auges tournent toujours dans le même sens, indiqué par chaque flèche 64a, 64b. Le sens de rotation est tel que les orifices d'accès 61 défilent de haut en bas devant les porcelets. Dans le schéma de la figure 3 les deux auges 60a, 60b sont donc entraînées en sens opposés par un même arbre d'entraînement.

Chaque auge 60 évolue cycliquement entre deux positions:
- une position de distribution de la ration de mélange d'aliment et de liquide de dilution dans l'auge au moyen du tuyau 66. Dans cette position de remplissage, les dégagements 61 sont sensiblement dirigés vers la cloison 63;
- une position d'alimentation et d'accès pour les porcelets, au contenu des auges, dans laquelle les dégagements 61 sont tournés vers les animaux.

Chaque auge 60 est surmontée d'une barre 65 s'étendant parallèlement à l'auge. Cette barre 65 est positionnée de façon à jouer le rôle de moyen pour empêcher les animaux d'atteindre la nourriture lorsque l'auge 60 n'est pas en position d'alimentation.

Cette disposition présente en outre l'avantage d'éviter que des animaux aient le groin pincé et blessé lors de l'escamotage des auges. En effet, l'escamotage s'effectuant par rotation vers le bas (flèche 64a) les risques d'accident de ce type sont annulés.

Lors de son passage de la position d'alimentation à la position de remplissage, l'auge se renverse, et se vide de son contenu.

Avantageusement, des rampes de lavage 67 disposées sous les auges assurent un nettoyage plus poussé, au moyen de buses d'injection 68.

Les auges sont avantageusement entraînées en rotation au moyen d'un moto réducteur (non représenté). Des microcontacteurs coopérent avec des disques à cames, de façon à ouvrir le circuit d'alimentation des motoréducteurs au moment du passage dans chacune des deux positions de remplissage et d'alimentation.

L'amorçage de la rotation des auges est assuré par l'envoi d'impulsions au moteur, jusqu'à réactivation du microconducteur et fermeture du circuit d'alimentation; la rotation du moteur est ensuite auto-entretenue jusqu'à atteindre la came suivante correspondant au passage dans la position suivante du cycle.

La commande des rampes de nettoyage 67 est également assurée par exemple à l'aide de microcontacteurs coopérant avec un disque à came distinct.

## Revendications

1. Procédé de préparation et de distribution d'aliments pour des animaux parqués dans une pluralité de cases (4) dans chacune desquelles se trouve une auge (9), lesdits aliments étant composés d'au moins un aliment sec en poudre mélangé à un liquide de dilution et étant distribué, à l'auge (9) de chacune des cases (4), en volume et concentration prédéterminés, consistant :
a) à préparer d'abord dans un mélangeur (20) un volume prédéterminé d'un mélange d'aliment sec et de liquide de dilution en concentration prédéterminée en aliment sec,
b) à distribuer ensuite par une canalisation (37), vers un mélangeur secondaire prévu dans chacune des cases (4), un volume du mélange en concentration unique obtenu en a) qui lui-même est fonction d'un volume final d'aliment à préparer pour chaque mélangeur secondaire, et
c) à diluer enfin, dans chaque mélangeur secondaire, le mélange distribué en b) avec le liquide de dilution afin d'obtenir, dans chaque mélangeur secondaire, le volume final d'aliment en concentration prédéterminée pour chaque mélangeur secondaire,
caractérisé en ce que les mélangeurs secondaires sont les auges (9), et en ce que la dilution effectuée en c) est réalisée en distribuant le liquide de dilution par la même canalisation (37) que celle par laquelle on a distribué en b) le mélange préparé en a).

2. Procédé selon la revendication 1, caractérisé en ce que le volume final d'aliment préparé pour chaque auge (9) à l'étape c) est fonction de l'âge physiologique des animaux à nourrir et de leur nombre dans chaque case (4) contenant l'auge (9) et la concentration en aliment sec du volume final d'aliment préparé en c) est fonction de la durée depuis laquelle lesdits animaux sont nourris dans les cases (4).

3. Installation pour la mise en oeuvre du procédé selon l'une quelconque des revendications 1 ou 2, comprenant un ensemble de cases (4a à 4c) où sont parqués des animaux et dans chacune desquelles sont installés une auge (9a à 9c), un mélangeur (20) présentant deux entrées (25, 30) et une sortie (35), une entrée (25) étant prévue pour recevoir l'aliment sec qui est stocké dans le silo (15) et qui est amené par un transporteur (16) et l'autre entrée (30) pour recevoir le liquide de dilution via un moyen de commande (28) d'alimentation, l'entrée (35) d'une pompe (36) étant branchée à la sortie du mélangeur (20) et la sortie (37) de ladite pompe (36) étant reliée à une canalisation unique (37) desservant, par l'intermédiaire de moyens de commande de distribution (38a, 38b, 3&), des mélangeurs secondaires de chacune des cases (4),
caractérisé en ce que:
- dans chacune des cases (4a à 4c) est installé un moyen (10a à 10c), pour pouvoir, de manière commandée, empêcher les animaux parqués dans la case (4a à 4c) d'atteindre l'auge (9a à 9c),
- le mélangeur (20) est muni d'un agitateur (22),
- les mélangeurs secondaires sont les auges (9a à 9c) et
- l'installation comprend un automate programmable (3) commandant le transporteur (16), l'agitateur (22), le moyen de commande d'alimentation (28), la pompe (36), les moyens de commande de distribution (38a à 38c) de chaque auge (9a à 9c) et le moyen (10a à 10c) pour empêcher les animaux d'atteindre les auges (9a à 9c).

4. Installation selon la revendication 3 caractérisée en ce que l'auge (60) est constituée d'un tube pourvu de dégagements (61) formant des orifices d'accès pour les animaux, et en ce que ladite auge (60) est entraînée en rotation entre deux positions :
- une position de distribution de la ration de mélange d'aliment et de liquide de dilution dans l'auge,
- une position d'alimentation et d'accès pour les porcelets, au contenu des auges.

5. Installation selon la revendication 4 caractérisée en ce que ladite auge (60) est entraînée cycliquement entre les deux positions, au cours de courses successives de rotation dans un même sens unique.

6. Installation selon l'une quelconque des revendications 4 ou 5 caractérisée en ce que ledit moyen pour empêcher les animaux d'atteindre les auges est constitué d'une barre (65) positionnée au-dessus de chaque auge (60).

7. Installation selon l'une quelconque des revendications 4 à 6 caractérisée en ce que ladite auge (60) coopère avec une rampe de nettoyage (67) située au-dessous de l'auge.

## Patentansprüche

1. Verfahren zur Herstellung und Verteilung von Futter für Tiere, die in einer Mehrzahl von Boxen (4) untergebracht sind, in denen sich jeweils ein Futtertrog (9) befindet, wobei besagtes Futter aus mindestens einem pulverförmigen Trockenfuttermittel besteht, welches mit einer Verdünnungsflüssigkeit vermischt wird und in vorher festgelegter Menge und Konzentration am Futtertrog (9) einer jeden Box (4) verteilt wird, darin bestehend, daß:
a) zuerst in einer Mischvorrichtung (20) eine vorher festgelegte Menge einer Mischung eines Trockenfuttermittels mit einer Verdünnungsflüssigkeit, mit vorher festgelegter Trockenfuttermittelkonzentration, zubereitet wird,
b) danach über eine Leitung (37) eine Menge der in a) hergestellten Mischung mit einheitlicher Konzentration in Sekundärmischvorrichtungen verteilt wird, die in jeder der Boxen (4) vorgesehen sind, wobei die besagte Menge von der für jede Sekundärmischvorrichtung herzustellenden Endfuttermenge abhängt, und
c) daß in jeder Sekundärmischvorrichtung die in b) verteilte Menge zuletzt mit der Verdünnungsflüssigkeit vermischt wird, damit in jeder Sekundärmischvorrichtung die Endmenge an Futter mit der für die jeweilige Sekundärmischvorrichtung vorher festgelegten Konzentration vorhanden ist,
dadurch gekennzeichnet, daß die Sekundärmischvorrichtungen die Futtertröge (9) sind und dadurch, daß die in c) erfolgende Verdünnung durch Verteilung der Verdünnungsflüssigkeit durch dieselbe Leitung (37) stattfindet, durch welche die in a) zubereitete Mischung in b) verteilt wurde.

2. Verfahren gemäß Anspruch 1, dadurch gekennzeichnet, daß die Endmenge an Futter, die im Schritt c) für jeden Futtertrog (9) zubereitet wurde, vom physiologischen Alter der zu fütternden Tiere sowie der Anzahl der Tiere in jeder Box (4), in der sich der Futtertrog (9) befindet, abhängt, und daß die Konzentration an Trockenfuttermittel der in c) zubereiteten Futterendmenge von der Zeitdauer abhängt, seit der die besagten Tiere in den Boxen (4) gefüttert werden.

3. Vorrichtung zur Durchführung des Verfahrens gemäß einem der Ansprüche 1 oder 2, bestehend aus einer Reihe von Boxen (4a bis 4c), in denen Tiere untergebracht sind und in denen jeweils ein Futtertrog (9a bis 9c) untergebracht ist, aus einer Mischvorrichtung (20) mit zwei Eingängen (25, 30) und einem Ausgang (35), wobei ein Eingang (25) der Zuführung des im Silo (15) gelagerten Trockenfuttermittels dient, das über eine Fördervorrichtung (16) zugeführt wird, und der andere Eingang (30) der Aufnahme der Verdünnungsflüssigkeit über ein Zufuhrsteuerungssystem (28) dient, wobei der Eingang (35) einer Pumpe (36) mit dem Ausgang der Mischvorrichtung (20) verbunden ist, und der Ausgang (37) der Pumpe (36) mit einer einheitlichen Leitung (37) verbunden ist, welche über Verteilersteuerungssysteme (38a, 38b, 38c) die Zufuhr zu den Sekundärmischvorrichtungen der Boxen (4) gewährleistet,
dadurch gekennzeichnet, daß:
- in jeder der Boxen (4a bis 4c) eine Vorrichtung (10a bis 10c) vorhanden ist, um in gesteuerter Weise die in den Boxen (4a bis 4c) gehaltenen Tiere daran zu hindern, den jeweiligen Futtertrog (9a bis 9c) zu erreichen,
- die Mischvorrichtung (20) mit einem Rührwerk (22) versehen ist,
- die Sekundärmischvorrichtungen auch die Futtertröge (9a bis 9c) sind, und daß:
- zur Vorrichtung ein programmierbarer Automat (3) gehört, welcher die Transportvorrichtung (16), das Rührwerk (22), das Zuführungssystem (28), die Pumpe (36), die Verteilungssteuersysteme (38a bis 38c) eines jeden Futtertroges (9a bis 9c) und die Vorrichtung (10a bis 10c), mit der die Tiere am Erreichen der Futtertröge (9a bis 9c) gehindert werden, steuert.

4. Vorrichtung gemäß Anspruch 3, dadurch gekennzeichnet, daß der Futtertrog (60) aus einem Rohr besteht, das mit Öffnungen (61) versehen ist, die den Zugang der Tiere ermöglichen und dadurch, daß der besagte Trog (60) zu einer Drehbewegung zwischen zwei Stellungen angetrieben wird:
- eine Stellung für die Verteilung der Futtermittelration und der Verdünnungsflüssigkeit in den Trog,
- eine Fütterungsstellung, die den Zugang der Ferkel zum Inhalt der Tröge ermöglicht.

5. Vorrichtung gemäß Anspruch 4, dadurch gekennzeichnet, daß der Trog (60) im Laufe aufeinanderfolgender Umdrehungen in die gleiche Richtung zyklisch zwischen den zwei Stellungen angetrieben wird.

6. Vorrichtung gemäß einem der Ansprüche 4 oder 5, dadurch gekennzeichnet, daß die Vorrichtung, um die Tiere am Erreichen der Tröge zu hindern, aus einer Stange (65) besteht, die über jedem Trog (60) angebracht ist.

7. Vorrichtung gemäß einem der Ansprüche 4 bis 6, dadurch gekennzeichnet, daß der Trog (60) mit einer Reinigungsrampe (67) zusammenwirkt, die sich unterhalb des Troges befindet.

## Claims

1. Method for the preparation and distribution of feed for animals penned in a plurality of stalls (4) in each of which there is a trough (9), the said feed being composed of at least one dry feed in powder form mixed with a diluting liquid and being distributed in a predetermined volume and concentration to the trough (9) of each of the stalls (4), the said method consisting in:
a) firstly preparing, in a mixer (20), a predetermined volume of a mixture of dry feed and of diluting liquid with a predetermined concentration of dry feed,
b) then distributing, through a pipeline (37) to a secondary mixer provided in each of the stalls (4), a volume of the mixture having only one concentration obtained in a), which volume is itself a function of a final volume of feed to be prepared for each secondary mixer and
c) finally diluting, in each secondary mixer, the mixture distributed in b) with the diluting liquid in order to obtain, in each secondary mixer, the final volume of feed with a predetermined concentration for each secondary mixer,
characterised in that the secondary mixers are the troughs (9) and in that the dilution carried out in c) is performed by distributing the diluting liquid through the same pipeline (37) as that through which the mixture prepared in a) was distributed in b).

2. Method according to Claim 1, characterised in that the final volume of feed prepared for each trough (9) in step c) is a function of the physiological age of the animals to be fed and of the number thereof in each stall (4) containing the trough (9) and the dry-feed concentration of the final volume of feed prepared in c) is a function of the period of time for which the said animals have been fed in the stalls (4).

3. Installation for the implementation of the method according to either of Claims 1 or 2, comprising a set of stalls (4a to 4c) in which animals are penned and in each of which there are installed a trough (9a to 9c), a mixer (20) which has two inlets (25, 30) and one outlet (35), one inlet (25) being designed to receive the dry feed which is stored in the bin (15) and is brought by a conveyor (16) and the other inlet (30) being designed to receive the diluting liquid through a supply control means (28), the inlet (35) of a pump (36) being connected to the outlet of the mixer (20) and the outlet (37) of the said pump (36) being connected to a single pipeline (37) which uses distribution control means (38a, 38b, 38c) to supply the secondary mixers of each of the stalls (4),
characterised in that:
- a means (10a to 10c) is installed in each of the stalls (4a to 4c) to make it possible, in a controlled way, to prevent the animals penned in the stall (4a to 4c) from reaching the trough (9a to 9c),
- the mixer (20) is fitted with a stirrer (22),
- the secondary mixers are the troughs (9a to 9c) and
- the installation comprises a programmable automaton (3) controlling the conveyor (16), the stirrer (22), the supply control means (28), the pump (36), the means (38a to 38c) for controlling the distribution to each trough (9a to 9c) and the means (10a to 10c) for preventing the animals from reaching the troughs (9a to 9c).

4. Installation according to Claim 3, characterised in that the trough (60) is made up of a tube provided with openings (61) forming access holes for the animals, and in that the said trough (60) is driven rotationally between two positions:
- a position for the distribution of the ration of feed and diluting liquid mixture into the trough,
- a position for supply and access, for the piglets, to the contents of the troughs.

5. Installation according to Claim 4, characterised in that the said trough (60) is driven cyclically between the two positions during successive rotational strokes in the same single direction.

6. Installation according to either of Claims 4 and 5, characterised in that the said means for preventing the animals from reaching the troughs is made up of a bar (65) positioned above each trough (60).

7. Installation according to any of Claims 4 to 6, characterised in that the said trough (60) interacts with a cleaning ramp (67) located beneath the trough.
